# EUROPÄISCHE PATENTSCHRIFT

(11) **EP 2 794 316 B1**
(45) Veröffentlichungstag und Bekanntmachung des Hinweises auf die Patenterteilung: **29.06.2016**
(21) Anmeldenummer: 12784557.6
(22) Anmeldetag: 05.11.2012
(51) Int. Cl.: B60K 6/387, B60K 6/547, F16H 3/00, B60W 30/19, B60W 10/06, B60W 10/08, B60W 20/00, B60K 6/48, B60W 10/113

(54) **HYBRIDANTRIEB EINES KRAFTFAHRZEUGS UND VERFAHREN ZUM BETREIBEN DESSELBEN**
HYBRID DRIVE OF A MOTOR VEHICLE AND METHOD FOR OPERATING SAME
ENTRAÎNEMENT HYBRIDE D'UN VÉHICULE AUTOMOBILE ET PROCÉDÉ DE FAIRE FONCTIONNER CELUI-CI

(30) Priorität: 21.12.2011 DE 102011089463
(43) Veröffentlichungstag der Anmeldung: 29.10.2014
(73) Patentinhaber: ZF Friedrichshafen AG, 88048 Friedrichshafen (DE)
(72) Erfinder: KALTENBACH, Johannes, 88048 Friedrichshafen (DE); GRIESMEIER, Uwe, 88677 Markdorf (DE)
(86) Internationale Anmeldenummer: PCT/EP2012/071792
(87) Internationale Veröffentlichungsnummer: WO 2013/091968

(56) Entgegenhaltungen:
- EP-A1- 2 281 727
- WO-A1-2010/007291
- DE-A1-102008 041 565
- DE-A1-102010 004 711
- DE-A1-102010 028 026
- US-A1- 2006 130 601

## Beschreibung

Die Erfindung betrifft einen Hybridantrieb eines Kraftfahrzeugs nach dem Oberbegriff des Patentanspruchs 1. Des Weiteren betrifft die Erfindung Verfahren zum Betreiben eines solchen Hybridantriebs.

Aus der DE 198 50 549 A1 ist ein Kraftfahrzeug mit einem Hybridantrieb bekannt, wobei der Hybridantrieb einen Verbrennungsmotor, eine elektrische Maschine und ein als Doppelkupplungsgetriebe ausgebildetes Getriebe umfasst. Das Doppelkupplungsgetriebe des Hybridantriebs der DE 198 50 549 A1 verfügt über zwei Teilgetriebe, die jeweils eine separate Eingangswelle und eine gemeinsame Ausgangswelle aufweisen, wobei nach diesem Stand der Technik jeder Eingangswelle eine reibschlüssige Kupplung zugeordnet ist, um den Verbrennungsmotor an die jeweilige Eingangswelle des jeweiligen Teilgetriebes anzukoppeln. Die Teilgetriebe des Doppelkupplungsgetriebes gemäß DE 198 50 549 A1 verfügen über formschlüssige Schaltelemente, über die beide Eingangswellen selektiv mit der gemeinsamen Ausgangswelle gekoppelt werden können. An wenigstens eine Eingangswelle wenigstens eines Teilgetriebes ist eine elektrische Maschine angekoppelt.

Die US-A-2006/0130601 offenbart einem ähnlichen Hybridantrieb.

Hiervon ausgehend liegt der vorliegenden Erfindung die Aufgabe zu Grunde, einen neuartigen Hybridantrieb eines Kraftfahrzeugs und Verfahren zum Betreiben eines solchen Hybridantriebs zu schaffen.

Diese Aufgabe wird durch einen Hybridantrieb gemäß Patentanspruch 1 gelöst. Erfindungsgemäß sind der zweiten Eingangswelle des zweiten Teilgetriebes mehrere formschlüssige Schaltelemente derart zugeordnet, dass dann, wenn ein erstes formschlüssiges Schaltelement geschlossen ist, die elektrische Maschine an den Verbrennungsmotor und damit der Verbrennungsmotor zusammen mit der elektrischen Maschine an das zweite Teilgetriebe gekoppelt ist, und dass dann, wenn ein zweites formschlüssiges Schaltelement geschlossen ist, die elektrische Maschine an beide Eingangswellen beider Teilgetriebe und damit das erste Teilgetriebe an das zweite Teilgetriebes gekoppelt ist.

Beim erfindungsgemäßen Hybridantrieb ist ausschließlich einer Eingangswelle eines Teilgetriebes des Getriebes eine reibschlüssige Kupplung zugeordnet, der anderen Eingangswelle des anderen Teilgetriebes sind formschlüssige Schaltelemente zugeordnet. Über das erste, formschlüssige Schaltelement, welches in geschlossenem Zustand die elektrische Maschine an dem Verbrennungsmotor und damit den Verbrennungsmotor zusammen mit der elektrischen Maschine an das zweite Teilgetriebe koppelt, ist ein verzögerungsfreies Anfahren aus einem generatorischen Ladebetrieb der elektrischen Maschine heraus möglich. Über das zweite, formschlüssige Schaltelement, über welches in geschlossenem Zustand die elektrische Maschine auch an die erste Eingangswelle des ersten Teilgetriebes und damit das erste Teilgetriebe an das zweite Teilgetriebe gekoppelt ist, kann sicher gestellt werden, dass die reibschlüssige Kupplung stets ais Trennkupplung zum Verbrennungsmotor genutzt werden kann, um so zum Beispiel bei einer Notbremsung auch unter Last den Verbrennungsmotor abkoppeln zu können, um so ein Abwürgen desselben zu verhindern. Mit einer einzigen elektrischen Maschine des Hybridantriebs können eine Vielzahl von Hybridfunktionen wie Laden in Neutral, Boosten, Rekuperieren und rein elektrisches Fahren realisiert werden. Weiterhin kann die elektrische Maschine als Lastschaltelement genutzt werden, die während der Ausführung von Schaltungen Zugkraft am Abtrieb aufrechterhält.

Vorzugsweise sind das erste formschlüssige Schaltelement und dass zweite formschlüssige Schaltelement zu einem Schaltpaket mit einem gemeinsamen Aktuator derart zusammengefasst, dass entweder ausschließlich das erste formschlüssige Schaltelement geschlossen ist oder ausschließlich das zweite formschlüssige Schaltelement geschlossen ist oder beide formschlüssigen Schaltelemente geöffnet sind. Mit dieser Ausgestaltung kann der benötigte Bauraum reduziert werden.

Erfindungsgemäße Verfahren zum Betreiben eines solchen Hybridantriebs sind in Patentansprüchen 4 bis 9 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

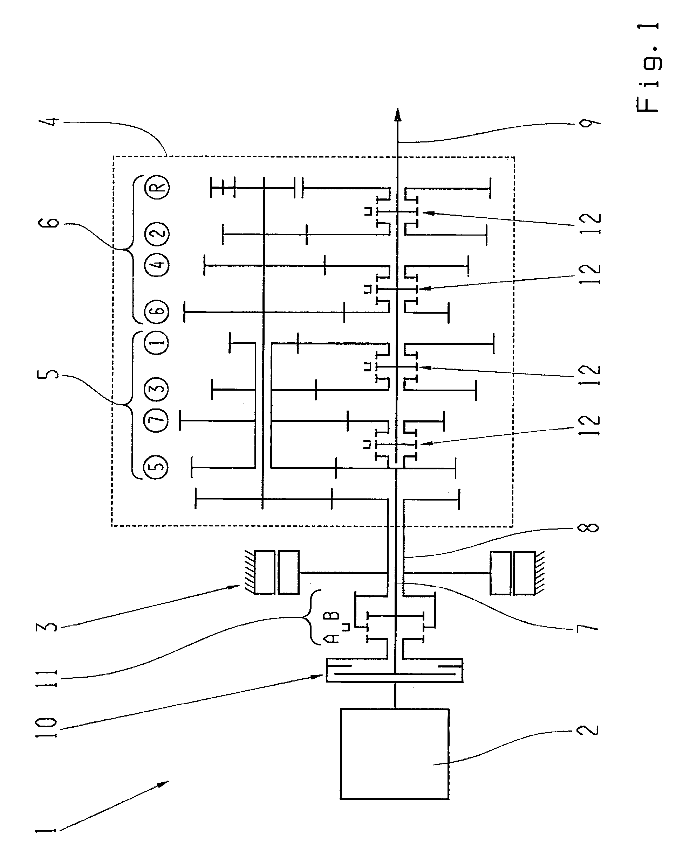

- Fig. 1: ein Schema eines erfindungsgemäßen Hybridantriebs eines Kraftfahrzeugs.

Fig. 1 zeigt eine bevorzugte Ausführungsform eines erfindungsgemäßen Hybridantriebs 1 eines Kraftfahrzeugs, wobei der Hybridantrieb 1 einen Verbrennungsmotor 2, eine elektrische Maschine 3 und ein Getriebe 4 umfasst. Das Getriebe 4 ist als mehrstufiges Schaltgetriebe mit zwei Teilgetrieben 5 und 6 ausgebildet, wobei die beiden Teilgetriebe 5 und 6 jeweils eine separate Eingangswelle 7 bzw. 8 und eine gemeinsame Ausgangswelle 9 aufweisen. Das erste Teilgetriebe 5 stellt im Ausführungsbeispiel der Fig. 1 die Vorwärtsgänge "1 ", "3", "5" und "7" bereit. Das zweite Teilgetriebe 6 stellt im gezeigten Ausführungsbeispiel die Vorwärtsgänge "2", "4" und "6" sowie den Rückwärtsgang "R" bereit.

Das Getriebe 4 mit den beiden Teilgetrieben 5 und 6 verfügt gemäß Fig. 1 über mehrere zu Schaltpaketen 12 zusammengefasste, formschlüssige Schaltelemente, über die jede der beiden Eingangswellen 7 und 8 der beiden Teilgetriebe 5 und 6 selektiv an die Ausgangswelle 9 des Getriebes 4 angekoppelt werden kann, wobei die Ausgangswelle 9 des Getriebes 4 auf einen Abtrieb wirkt.

Einer Eingangswelle eines Teilgetriebes des Getriebes 4, nämlich in Fig. 1 der ersten Eingangswelle 7 des ersten Teilgetriebes 5, ist eine reibschlüssige Kupplung 10 zugeordnet, nämlich derart, dass diese reibschlüssige Kupplung 10, die auch als Trennkupplung bezeichnet werden kann, zwischen den Verbrennungsmotor 2 und die erste Eingangswelle 7 des ersten Teilgetriebes 5 geschaltet ist. Dann, wenn die reibschlüssige Kupplung 10 geschlossen ist, ist der Verbrennungsmotor 2 an die erste Eingangswelle 7 und damit an das erste Teilgetriebe 5 angekoppelt. Dann hingegen, wenn die reibschlüssige Kupplung 10 geöffnet ist, ist der Verbrennungsmotor 2 von der ersten Eingangswelle 7 und damit vom ersten Teilgetriebe 5 des Getriebes 4 abgekoppelt.

Die einzige elektrische Maschine 3 des Hybridantriebs 1 ist fest mit der anderen Eingangswelle des anderen Teilgetriebes gekoppelt, nämlich in Fig. 1 mit der zweiten Eingangswelle 8 des zweiten Teilgetriebes 6.

An dieser Stelle sei darauf hingewiesen, dass im gezeigten, bevorzugten Ausführungsbeispiel die beiden Eingangswellen 7 und 8 der beiden Teilgetriebe 5 und 6 koaxial zueinander angeordnet sind. Dabei greift die elektrische Maschine 3 an der äußeren Eingangswelle 8 des zweiten Teilgetriebes 6 an, nämlich in Fig. 1 unmittelbar. Es kann jedoch zwischen diese Eingangswelle 8 des zweiten Teilgetriebes 6 und die elektrische Maschine 3 auch eine Konstantübersetzungsstufe geschaltet sein.

Im Unterschied zum gezeigten Ausführungsbeispiel ist es auch möglich, eine axialparallele Anordnung zu wählen und die elektrische Maschine über eine Stirnradstufe, einen Riementrieb oder Kettentrieb an die jeweilige Eingangswelle des jeweiligen Teilgetriebes anzukoppeln.

Dem Teilgetriebe des Getriebes 4, an dessen Eingangswelle die elektrische Maschine 3 fest angekoppelt ist, also in Fig. 1 der zweiten Eingangswelle 8 des zweiten Teilgetriebes 6, ist keine reibschlüssige Kupplung zugeordnet, vielmehr sind der zweiten Eingangswelle 8 des zweiten Teilgetriebe 6 mehrere formschlüssige Schaltelemente A und B zugeordnet, die gemäß Fig. 1 zu einem Schaltpaket 11 zusammengefasst sind.

Dann, wenn ein erstes formschlüssiges Schaltelement A geschlossen ist, ist die elektrische Maschine 3 an den Verbrennungsmotor 2 und damit der Verbrennungsmotor 2 zusammen mit der elektrischen Maschine 3 an das zweite Teilgetriebe 6 gekoppelt, nämlich an die Eingangswelle 8 des zweiten Teilgetriebes 6, und zwar unter Umgehung der reibschlüssigen Kupplung 10. Dann, wenn ein zweites formschlüssiges Schaltelement B geschlossen ist, sind die beiden Eingangswellen 7 und 8 und damit die beiden Teilgetriebe 5 und 6 gekoppelt, sodass demnach die elektrische Maschine 3 sowohl an die zweite Eingangswelle 8 des zweiten Teilgetriebe 6 als auch an die erste Eingangswelle 7 des ersten Teilgetriebes 5 gekoppelt ist.

Da entweder nur das erste Schaltelement A oder das zweite Schaltelement B geschlossen ist, sind beide Schaltelement A und B vorzugsweise zu dem Schaltpaket 11 mit einem gemeinsamen Aktuator zusammen gefasst. So ist also entweder ausschließlich das erste formschlüssige Schaltelement A geschlossen oder ausschließlich das zweite formschlüssige Schaltelement B geschlossen, oder beide formschlüssigen Schaltelemente A und B sind geöffnet.

Das erste formschlüssige Schaltelement A ist insbesondere im generatorischen Betrieb der elektrischen Maschine 3 und damit im Ladebetrieb derselben dann geschlossen, wenn im generatorischen Betrieb der elektrischen Maschine 3 die Geschwindigkeit des Kraftfahrzeugs kleiner als ein Grenzwert ist, insbesondere dann, wenn das Kraftfahrzeug still steht und die Geschwindigkeit desselben Null beträgt. Dann, wenn im generatorischen Betrieb der elektrischen Maschine 3 die Geschwindigkeit des Kraftfahrzeugs größer als der Grenzwert ist, oder im motorischen Betrieb der elektrischen Maschine 3, ist das erste formschlüssige Schaltelement A geöffnet.

Zum generatorischen Betrieb der elektrischen Maschine 3 und damit Ladebetrieb derselben bei stillstehendem Kraftfahrzeug ist demnach das erste formschlüssige Schaltelement A geschlossen, im ersten Teilgetriebe 5 ist ein Anfahrgang eingelegt, im zweiten Teilgetriebe 6 ist eine Neutralposition eingelegt und die reibschlüssige Kupplung 10 ist geöffnet oder maximal bis zum Anlegepunkt derselben geschlossen. Zum nachfolgenden Anfahren oder Ankriechen kann die reibschlüssige Kupplung 10 über den Anlegepunkt hinaus geschlossen werden, wobei das Anfahren oder Ankriechen bei geschlossener bzw. haftender reibschlüssiger Kupplung 10 beendet ist.

Im generatorischen Ladebetrieb der elektrischen Maschine 3 im Stillstand des Kraftfahrzeugs ist demnach ein verzögerungsfreies Anfahren bzw. Ankriechen möglich, da die elektrische Maschine 3 bei geschlossenem ersten Schaltelement A bezüglich der reibschlüssigen Kupplung 10 an den Verbrennungsmotor 2 angebunden ist. Dann, wenn in diesem Zustand, also bei über das erste Schaltelement A aneinander gekoppeltem Verbrennungsmotor 2 und elektrischer Maschine 3, bei zweiten Teilgetriebe 6 in Neutral und bei im ersten Teilgetriebe 5 eingelegtem Anfahrgang, die Kupplung 10 geschlossen wird, kann sofort verzögerungsfrei eine Fahrzeugreaktion, nämlich ein verzögerungsfreies Anfahren bzw. Ankriechen, realisiert werden.

Wie bereits ausgeführt, ist insbesondere im generatorischen Betrieb oder Ladebetrieb der elektrischen Maschine 3 bei relativ kleinen Fahrgeschwindigkeiten, insbesondere im Stillstand des Kraftfahrzeugs das erste formschlüssige Schaltelement A geschlossen.

In anderen Situationen, also dann, wenn im generatorischen Betrieb der elektrischen Maschine 3 die Fahrgeschwindigkeit des Kraftfahrzeugs größer als der Grenzwert ist, oder im motorischen Betrieb der elektrischen Maschine 3, ist das erste formschlüssige Schaltelement A geöffnet und bedarfsabhängig bzw. situationsabhängig ist das zweite formschlüssige Schaltelement B geschlossen.

Dann, wenn das zweite formschlüssige Schaltelement B während der Fahrt des Kraftfahrzeugs geschlossen ist, wenn also die beiden Eingangswellen 7 und 8 der beiden Teilgetriebe 5 und 6 aneinander gekoppelt sind, wirkt die reibschlüssige Kupplung 10 immer als Trennkupplung zum Verbrennungsmotor 2, sodass zum Beispiel bei einer Notbremsung die Trennkupplung 10 unter Last geöffnet werden kann, sodass dann der Verbrennungsmotor 2 nicht abgewürgt wird.

Dann, wenn im Getriebe 4 ein Gangwechsel von einem Ist-Gang des ersten Teilgetriebes 5 in einen Ziel-Gang des zweiten Teilgetriebes 6 ausgehend von einer verbrennungsmotorischen Fahrt des Kraftfahrzeugs bei geschlossener, reibschlüssiger Kupplung 10 und bei geöffneten, formschlüssigen Schaltelementen A und B ausgeführt werden soll, wird zunächst der Ziel-Gang im zweiten Teilgetriebe 6 synchronisiert und nach Synchronisierung eingelegt, wobei die Synchronisierung des Ziel-Gangs im zweiten Teilgetriebe 6 über einen drehzahlgeregelten Betrieb der elektrischen Maschine 3 erfolgt. Anschließend wird zur Gewährleistung eines Lastübergangs von dem Verbrennungsmotor 2 auf die elektrische Maschine 3 zeitlich überschnitten an der elektrischen Maschine 3 Last aufgebaut und an dem Verbrennungsmotor 2 Last abgebaut sowie bedarfsweise die reibschlüssige Kupplung 10 geöffnet, wobei anschließend der Ist-Gang im ersten Teilgetriebe 5 ausgelegt wird. Hierbei wird das zweite Schaltelement B synchronisiert und dann lastfrei geschlossen, wobei die Synchronisierung des zweiten Schaltelements B zum Beispiel durch Synchronelemente des zweiten Schaltelements oder durch eine nicht gezeigte Getriebebremse am ersten Teilgetriebe 5 erfolgen kann. Anschließend an das Schließen des zweiten Schaltelements B wird zur Gewährleistung eines Lastübergangs von der elektrischen Maschine 3 zurück auf den Verbrennungsmotor 2 zeitlich überschnitten an der elektrischen Maschine 3 Last abgebaut und an dem Verbrennungsmotor 2 Last aufgebaut sowie bedarfsweise die reibschlüssige Kupplung 10 geschlossen, falls dieselbe zuvor geöffnet war.

Hiermit ist dann der Gangwechsel vom Ist-Gang des ersten Teilgetriebes 5 in einen Ziel-Gang des zweiten Teilgetriebes 6 abgeschlossen, wobei anschließend die Aufteilung eines angeforderten Fahrmoments zwischen Verbrennungsmotor 2 und elektrischer Maschine 3 entsprechend der Vorgabe einer Betriebsstrategie erfolgt.

Bei dem obigen Gangwechsel vom Ist-Gang des ersten Teilgetriebe 5 in den Ziel-Gang des zweiten Teilgetriebes 6 kann es sich zum Beispiel um einen Gangwechsel vom Vorwärtsgang "1" in den Vorwärtsgang "2" oder vom Vorwärtsgang "3" in den Vorwärtsgang "4" oder vom Vorwärtsgang "5" in den Vorwärtsgang "6" handeln.

Dann, wenn im Getriebe 4 ein Gangwechsel von einem Ist-Gang des zweiten Teilgetriebes 6 in einen Ziel-Gang des ersten Teilgetriebes 5 ausgehend von einer verbrennungsmotorischen Fahrt des Kraftfahrzeugs bei geschlossener, reibschlüssiger Kupplung 10, bei geöffnetem ersten formschlüssigen Schaltelement A und geschlossenem zweiten formschlüssigen Schaltelement B ausgeführt werden soll, wird zunächst zur Gewährleistung eines Lastübergangs von dem Verbrennungsmotor 2 auf die elektrische Maschine 3 zeitlich überschnitten an der elektrischen Maschine 3 Last aufgebaut und an dem Verbrennungsmotor 2 Last abgebaut. Darauffolgend wird das zweite formschlüssige Schaltelement B geöffnet, nämlich lastfrei. Bedarfsweise wird die reibschlüssige Kupplung 10 geöffnet. Anschließend wird der Ziel-Gang im ersten Teilgetriebe 5 synchronisiert und eingelegt, wobei darauffolgend zur Gewährleistung eines Lastübergangs von der elektrischen Maschine 3 zurück auf den Verbrennungsmotor 2 zeitlich überschnitten an der elektrischen Maschine 3 Last abgebaut und an dem Verbrennungsmotor 2 Last aufgebaut sowie bedarfsweise die reibschlüssige Kupplung 10 geschlossen wird. Anschließend kann der Ist-Gang des zweiten Teilgetriebes 6 ausgelegt werden. Nach Abschluss dieses Gangwechsels von dem Ist-Gang des zweiten Teilgetriebes 6 in den Ziel-Gang des ersten Teilgetriebes 5 erfolgt wiederum eine Aufteilung des angeforderten Fahrmoments zwischen Verbrennungsmotor 2 und elektrischer Maschine 3 entsprechend der Vorgabe einer Betriebsstrategie.

Bei dem obigen Gangwechsel vom Ist-Gang des zweiten Teilgetriebes 6 in den Ziel-Gang des ersten Teilgetriebes 5 kann es sich zum Beispiel um einen Gangwechsel vom Vorwärtsgang "2" in den Vorwärtsgang "3" oder vom Vorwärtsgang "4" in den Vorwärtsgang "5" oder vom Vorwärtsgang "6" in den Vorwärtsgang "7" handeln.

Dann, wenn im Getriebe 4 ein Gangwechsel vom einem Ist-Gang des ersten Teilgetriebes 5 in einen Ziel-Gang des ersten Teilgetriebes 5 ausgehend von einer verbrennungsmotorischen Fahrt des Kraftfahrzeugs bei geschlossener, reibschlüssiger Kupplung 10 und bei geöffneten, formschlüssigen Schaltelementen A und B ausgeführt werden soll, wird zunächst im zweiten Teilgetriebe 6 ein Zwischengang synchronisiert und eingelegt. Anschließend wird zur Gewährleistung eines Lastübergangs von dem Verbrennungsmotor 2 auf die elektrische Maschine 3 zeitlich überschnitten am Verbrennungsmotor 2 Last abgebaut und an der elektrischen Maschine 3 Last aufgebaut sowie bedarfsweise die reibschlüssige Kupplung 10 geöffnet. Darauffolgend wird der Ist-Gang im ersten Teilgetriebe 5 ausgelegt, der Ziel-Gang desselben synchronisiert und eingelegt. Anschließend wird zur Gewährleistung eines Lastübergangs von der elektrischen Maschine 3 zurück auf den Verbrennungsmotor 2 zeitlich überschnitten an der elektrischen Maschine 3 Last abgebaut und an dem Verbrennungsmotor 2 Last aufgebaut sowie bedarfsweise die reibschlüssige Kupplung 10 geschlossen. Darauffolgend kann im zweiten Teilgetriebe 6 der zuvor eingelegte Zwischengang wieder ausgelegt werden.

Bei dem obigen Gangwechsel vom Ist-Gang des ersten Teilgetriebes 5 in einen Ziel-Gang des ersten Teilgetriebes 5 kann es sich zum Beispiel um einen Gangwechsel vom Vorwärtsgang "1" in den Vorwärtsgang "3" oder vom Vorwärtsgang "3" in den Vorwärtsgang "5" oder vom Vorwärtsgang "5" in den Vorwärtsgang "7" handeln. Als Zwischengang wird dabei im zweiten Teilgetriebe 6 der Vorwärtsgang "2" für einen Gangwechsel vom Vorwärtsgang "1" in den Vorwärtsgang "3" eingelegt.

Ebenso ist es möglich, im Getriebe 4 einen Gangwechsel von einem Ist-Gang des zweiten Teilgetriebes 6 in einen Ziel-Gang des zweiten Teilgetriebes 6 ausgehend von einer verbrennungsmotorischen Fahrt des Kraftfahrzeugs bei geschlossener, reibschlüssiger Kupplung 10, bei geöffnetem, formschlüssigen Schaltelement A und geschlossenem, formschlüssigen Schaltelement B auszuführen, wobei hierzu zunächst zur Gewährleistung eines Lastübergangs vom Verbrennungsmotor 2 auf die elektrische Maschine 3 zeitlich überschnitten an der elektrischen Maschine 3 Last aufgebaut und an dem Verbrennungsmotor 2 Last abgebaut wird. Darauffolgend wird das zweite, formschlüssige Schaltelement B lastfrei geöffnet. Bedarfsweise wird die reibschlüssige Kupplung 10 geöffnet.

Anschließend wird im ersten Teilgetriebe 5 ein Zwischengang synchronisiert und eingelegt, wobei anschließend zur Gewährleistung eines Lastübergangs von der elektrischen Maschine 3 zurück auf den Verbrennungsmotor 2 zeitlich überschnitten an der elektrischen Maschine 3 Last abgebaut und am Verbrennungsmotor 2 Last aufgebaut sowie bedarfsweise die reibschlüssige Kupplung 10 geschlossen wird. Darauffolgend wird der Ist-Gang des zweiten Teilgetriebes 6 ausgelegt sowie der Ziel-Gang des zweiten Teilgetriebes 6 synchronisiert und eingelegt. Anschließend erfolgt abermals ein Lastübergang vom Verbrennungsmotor 2 auf die elektrische Maschine 3, indem zeitlich überschnitten an dem Verbrennungsmotor 2 Last abgebaut und an der elektrischen Maschine 3 Last aufgebaut sowie bedarfsweise die reibschlüssige Kupplung 10 geöffnet wird. Anschließend wird der Zwischengang des ersten Teilgetriebes 5 ausgelegt und das zweite, formschlüssige Schaltelement B synchronisiert und lastfrei eingelegt, um anschließend einen Lastübergang von der elektrischen Maschine 3 zurück auf den Verbrennungsmotor 2 auszuführen, wozu wiederum zeitlich überschnitten an der elektrischen Maschine 3 Last abgebaut und am Verbrennungsmotor 2 Last aufgebaut sowie bedarfsweise die reibschlüssige Kupplung 10 geschlossen wird.

Bei dem obigen Gangwechsel vom Ist-Gang des zweiten Teilgetriebes 6 in einen Ziel-Gang des zweiten Teilgetriebes 6 kann es sich zum Beispiel um einen Gangwechsel vom Vorwärtsgang "2" in den Vorwärtsgang "4" oder vom Vorwärtsgang "4" in den Vorwärtsgang "6" handeln. Als Zwischengang wird dabei im ersten Teilgetriebe 5 der Vorwärtsgang "3" für einen Gangwechsel vom Vorwärtsgang "2" in den Vorwärtsgang "4" eingelegt.

Es sei darauf hingewiesen, dass die in Fig. 1 gezeigte Gangzuordnung der Gänge zu den Teilgetrieben 5 und 6 des Getriebes 4 unterschiedlich sein kann. Es ist also nicht zwingend erforderlich, dass das erste Teilgetriebe 5 ungerade Gänge und das zweite Teilgetriebe 6 gerade Gänge bereitstellt.

Um eine Lastschaltbarkeit über die elektrische Maschine 3 zu gewährleisten, sollen jedoch die Gänge des zweiten Teilgetriebes 6, an dessen Eingangswelle 8 die elektrische Maschine 3 angreift, nicht direkt benachbarte Gänge sein.

Vorzugsweise weist das zweite Teilgetriebe 6, an dessen Eingangswelle 8 die elektrische Maschine 3 angreift, zwei elektrische Fahrgänge auf, mit denen bezüglich der elektrischen Maschine 3 der gesamte Geschwindigkeitsbereich abgedeckt werden kann. Diese dienen dann vorzugsweise auch als Stützgänge für Schaltungen bzw. Gangwechsel.

Im Fahrbetrieb kann der Hybridantrieb 1 so betrieben werden, dass der Kraftfluss der elektrischen Maschine 3 ausschließlich über das zweite Teilgetriebe 6 wirkt. Der Verbrennungsmotor 2 kann dann jederzeit durch Öffnen der reibschlüssigen Kupplung 10 vom Getriebe 4 abgekoppelt werden. Für ein nachfolgendes Ankoppeln desselben stehen dann alle Gange des ersten Teilgetriebes 5 und der aktuelle Gang des zweiten Teilgetriebes 6 zu Verfügung. Dies ist vorteilhaft, da sich bei abgekoppeltem Verbrennungsmotor 2 die Geschwindigkeit des Kraftfahrzeugs stark ändern kann, insbesondere beim regenerativem Bremsen, sodass zum nachfolgenden Ankoppeln des Verbrennungsmotor 2 ein kleinerer Gang benötigt wird als zum Zeitpunkt des Abkoppelns desselben.

### Bezugszeichen

- 1: Hybridantrieb
- 2: Verbrennungsmotor
- 3: elektrische Maschine
- 4: Getriebe
- 5: erstes Teilgetriebe
- 6: zweites Teilgetriebe
- 7: erste Eingangswelle
- 8: zweite Eingangswelle
- 9: Ausgangswelle
- 10: reibschlüssige Kupplung
- 11: Schaltpaket
- 12: Schaltpaket
- A: erstes formschlüssiges Schaltelement
- B: zweites formschlüssiges Schaltelement

## Patentansprüche

1. Hybridantrieb eines Kraftfahrzeugs, mit einem Verbrennungsmotor (2), mit einer elektrischen Maschine (3) und mit einem Getriebe (4), wobei das Getriebe (4) als mehrstufiges Schaltgetriebe mit zwei Teilgetrieben (5, 6), die jeweils eine separate Eingangswelle (7, 8) und eine gemeinsame Ausgangswelle (9) aufweisen, ausgebildet ist, wobei eine erste Eingangswelle (7) eines ersten Teilgetriebes (5) über eine reibschlüssige Kupplung (10) derart an den Verbrennungsmotor (2) koppelbar ist, dass bei geschlossener Kupplung (10) der Verbrennungsmotor (2) an die erste Eingangswelle (7) und damit an das erste Teilgetriebe (5) gekoppelt und bei geöffneter Kupplung (10) derselbe von der ersten Eingangswelle (7) und damit von dem ersten Teilgetriebe (5) abgekoppelt ist, wobei eine zweite Eingangswelle (8) eines zweiten Teilgetriebes (6) fest mit der elektrischen Maschine (3) gekoppelt ist, und wobei beide Eingangswellen (7, 8) über formschlüssige Schaltelemente der Teilgetriebe (5, 6) selektiv mit der gemeinsamen Ausgangswelle (9) koppelbar sind, **dadurch gekennzeichnet, dass** der zweiten Eingangswelle (8) des zweiten Teilgetriebes (6) mehrere formschlüssige Schaltelemente (A, B) derart zugeordnet sind, dass dann, wenn ein erstes formschlüssiges Schaltelement (A) geschlossen ist, die elektrische Maschine (3) an den Verbrennungsmotor (2) und damit der Verbrennungsmotor (2) zusammen mit der elektrischen Maschine (3) an das zweite Teilgetriebe (6) gekoppelt ist, und dass dann, wenn ein zweites formschlüssiges Schaltelement (B) geschlossen ist, die elektrische Maschine (3) an beide Eingangswellen (7, 8) beider Teilgetriebe (5, 6) und damit das erste Teilgetriebe (5) an das zweite Teilgetriebes (6) gekoppelt ist.

2. Hybridantrieb nach Anspruch 1, **dadurch gekennzeichnet, dass** das erste formschlüssige Schaltelement (A) und dass zweite formschlüssige Schaltelement (B) zu einem Schaltpaket (11) mit einem gemeinsamen Aktuator derart zusammengefasst sind, dass entweder ausschließlich das erste formschlüssige Schaltelement (A) geschlossen ist oder ausschließlich das zweite formschlüssige Schaltelement (B) geschlossen ist oder beide formschlüssigen Schaltelemente (A, B) geöffnet sind.

3. Hybridantrieb nach Anspruch 1 oder 2, **dadurch gekennzeichnet, dass** die Eingangswellen (7, 8) der beiden Teilgetriebe (5, 6) koaxial zueinander angeordnet sind.

4. Verfahren zum Betreiben eines Kraftfahrzeugs mit einem Hybridantrieb nach einem der Ansprüche 1 bis 3, **dadurch gekennzeichnet, dass** das erste formschlüssige Schaltelement (A) im generatorischen Betrieb der elektrischen Maschine (3) dann geschlossen ist, wenn die Geschwindigkeit des Kraftfahrzeugs kleiner als ein Grenzwert ist, insbesondere dann, wenn das Kraftfahrzeug stillsteht, und dass das erste formschlüssige Schaltelement (A) dann geöffnet und vorzugsweise das zweite formschlüssige Schaltelement (B) dann geschlossen ist, wenn die Geschwindigkeit des Kraftfahrzeugs größer als der Grenzwert ist.

5. Verfahren zum Betreiben eines Hybridantriebs nach einem der Ansprüche 1 bis 3, **dadurch gekennzeichnet, dass** dann, wenn das Kraftfahrzeug steht, zum generatorischen Betrieb der elektrischen Maschine (3) das erste formschlüssige Schaltelement (A) geschlossen, im ersten Teilgetriebe (5) ein Anfahrgang eingelegt, im zweiten Teilgetriebe (6) eine Neutralposition eingelegt, und die reibschlüssige Kupplung (10) maximal bis zum Anlegepunkt derselben geschlossen wird, wobei zum nachfolgenden Anfahren oder Ankriechen die reibschlüssige Kupplung (10) über den Anlegepunkt hinaus geschlossen wird, und wobei das Anfahren oder Ankriechen bei haftender reibschlüssiger Kupplung (10) beendet ist.

6. Verfahren zum Betreiben eines Hybridantriebs nach einem der Ansprüche 1 bis 3, **dadurch gekennzeichnet, dass** zur Ausführung eines Gangswechsels von einem Ist-Gang des ersten Teilgetriebes (5) in einen Ziel-Gang des zweiten Teilgetriebes (6) ausgehend von einer verbrennungsmotorischen Fahrt des Kraftfahrzeugs bei geschlossener reibschlüssiger Kupplung (10) und bei geöffneten formschlüssigen Schaltelementen (A, B) zunächst der Ziel-Gang synchronisiert und sodann eingelegt wird, anschließend zur Gewährleistung eines Lastübergangs von dem Verbrennungsmotor (2) auf die elektrische Maschine (3) an der elektrischen Maschine (3) Last aufgebaut und an dem Verbrennungsmotor (2) Last abgebaut sowie bedarfsweise die reibschlüssige Kupplung (10) geöffnet wird, darauffolgend der Ist-Gang ausgelegt und das zweite Schaltelement (B) synchronisiert und geschlossen wird, und anschließend zur Gewährleistung eines Lastübergangs von der elektrische Maschine (3) zurück auf den Verbrennungsmotor (2) an der elektrischen Maschine (3) Last abgebaut und an dem Verbrennungsmotor (2) Last aufgebaut sowie bedarfsweise die reibschlüssige Kupplung (10) geschlossen wird.

7. Verfahren zum Betreiben eines Hybridantriebs nach einem der Ansprüche 1 bis 3, **dadurch gekennzeichnet, dass** zur Ausführung eines Gangwechsels von einem Ist-Gang des zweiten Teilgetriebes (6) in einen Ziel-Gang des ersten Teilgetriebes (5) ausgehend von einer verbrennungsmotorischen Fahrt des Kraftfahrzeugs bei geschlossener reibschlüssiger Kupplung (10), bei geöffnetem ersten formschlüssigen Schaltelement (A) und geschlossenem zweiten formschlüssigen Schaltelement (B) zunächst zur Gewährleistung eines Lastübergangs von dem Verbrennungsmotor (2) auf die elektrische Maschine (3) an der elektrischen Maschine (3) Last aufgebaut und an dem Verbrennungsmotor (2) Last abgebaut, das zweite formschlüssige Schaltelement (B) geöffnet sowie bedarfsweise die reibschlüssige Kupplung (10) geöffnet wird, darauffolgend der Ziel-Gang synchronisiert und sodann eingelegt wird, darauffolgend zur Gewährleistung eines Lastübergangs von der elektrische Maschine (3) zurück auf den Verbrennungsmotor (2) an der elektrischen Maschine (3) Last abgebaut und an dem Verbrennungsmotor (2) Last aufgebaut sowie bedarfsweise die reibschlüssige Kupplung (10) geschlossen wird.

8. Verfahren zum Betreiben eines Hybridantriebs nach einem der Ansprüche 1 bis 3, **dadurch gekennzeichnet, dass** zur Ausführung eines Gangwechsels von einem Ist-Gang des ersten Teilgetriebes (5) in einen Ziel-Gang des ersten Teilgetriebes (5) ausgehend von einer verbrennungsmotorischen Fahrt des Kraftfahrzeugs bei geschlossener reibschlüssiger Kupplung (10) und bei geöffneten formschlüssigen Schaltelementen (A, B) zunächst im zweiten Teilgetriebe (6) ein Zwischengang synchronisiert und eingelegt wird, abschließend zur Gewährleistung eines Lastübergangs von dem Verbrennungsmotor (2) auf die elektrische Maschine (3) an der elektrischen Maschine (3) Last aufgebaut und an dem Verbrennungsmotor (2) Last abgebaut sowie bedarfsweise die reibschlüssige Kupplung (10) geöffnet wird, darauffolgend der Ist-Gang ausgelegt sowie der Ziel-Gang synchronisiert und eingelegt wird, anschließend zur Gewährleistung eines Lastübergangs von der elektrischen Maschine (3) zurück auf den Verbrennungsmotor (2) an der elektrischen Maschine (3) Last abgebaut und an dem Verbrennungsmotor 2) Last aufgebaut sowie bedarfsweise die reibschlüssige Kupplung (10) geschlossen wird.

9. Verfahren zum Betreiben eines Hybridantriebs nach einem der Ansprüche 1 bis 3, **dadurch gekennzeichnet, dass** zur Ausführung eines Gangwechsels von einem Ist-Gang des zweiten Teilgetriebes (6) in einen Ziel-Gang des zweiten Teilgetriebes (6) ausgehend von einer verbrennungsmotorischen Fahrt des Kraftfahrzeugs bei geschlossener reibschlüssiger Kupplung (10), bei geöffnetem ersten formschlüssigen Schaltelement (A) und geschlossenem zweiten formschlüssigen Schaltelement (B) zunächst zur Gewährleistung eines Lastübergangs von dem Verbrennungsmotor (2) auf die elektrische Maschine (3) an der elektrischen Maschine (3) Last aufgebaut und an dem Verbrennungsmotor (2) Last abgebaut, das zweite formschlüssige Schaltelement (B) geöffnet sowie bedarfsweise die reibschlüssige Kupplung (10) geöffnet wird, anschließend ein Zwischengang des ersten Teilgetriebes (5) synchronisiert und eingelegt wird, anschließend zur Gewährleistung eines Lastübergangs von der elektrische Maschine (3) zurück auf den Verbrennungsmotor (2) an der elektrischen Maschine (3) Last abgebaut und an dem Verbrennungsmotor(2) Last aufgebaut sowie bedarfsweise die reibschlüssige Kupplung (10) geschlossen wird, drauffolgend der Ist-Gang des zweiten Teilgetriebes (6) ausgelegt sowie der Ziel-Gang des zweiten Teilgetriebes (6) synchronisiert und eingelegt wird, anschließend zur Gewährleistung eines weiteren Lastübergangs von dem Verbrennungsmotor (2) auf die elektrische Maschine (3) an der elektrischen Maschine (3) Last aufgebaut und an dem Verbrennungsmotor (2) Last abgebaut sowie bedarfsweise die reibschlüssige Kupplung (10) geöffnet wird, anschließend der Zwischengang des ersten Teilgetriebes (5) ausgelegt und das zweite formschlüssige Schaltelement (B) synchronisiert und eingelegt wird, und darauffolgend zur Gewährleistung eines weiteren Lastübergangs von der elektrische Maschine (3) zurück auf den Verbrennungsmotor (2) an der elektrischen Maschine (3) Last abgebaut und an dem Verbrennungsmotor (2) Last aufgebaut sowie bedarfsweise die reibschlüssige Kupplung (10) geschlossen wird.

## Claims

1. Hybrid drive of a motor vehicle, having an internal combustion engine (2), having an electric machine (3) and having a transmission (4), the transmission (4) being configured as a multiple-stage manual transmission with two component transmissions (5, 6) which in each case have a separate input shaft (7, 8) and a common output shaft (9), it being possible for a first input shaft (7) of a first component transmission (5) to be coupled via a frictional clutch (10) to the internal combustion engine (2) in such a way that, when the clutch (10) is closed, the internal combustion engine (2) is coupled to the first input shaft (7) and therefore to the first component transmission (5), and, when the clutch (10) is open, the said internal combustion engine (2) is decoupled from the first input shaft (7) and therefore from the first component transmission (5), a second input shaft (8) of a second component transmission (6) being coupled fixedly to the electric machine (3), and it being possible for both input shafts (7, 8) to be coupled selectively to the common output shaft (9) via positively locking shifting elements of the component transmissions (5, 6), **characterized in that** the second input shaft (8) of the second component transmission (6) is assigned a plurality of positively locking shifting elements (A, B) in such a way that, when a first positively locking shifting element (A) is closed, the electric machine (3) is coupled to the internal combustion engine (2), and therefore the internal combustion engine (2) is coupled together with the electric machine (3) to the second component transmission (6), and **in that**, when a second positively locking shifting element (B) is closed, the electric machine (3) is coupled to both input shafts (7, 8) of both component transmissions (5, 6), and therefore the first component transmission (5) is coupled to the second component transmission (6).

2. Hybrid drive according to Claim 1, **characterized in that** the first positively locking shifting element (A) and the second positively locking shifting element (B) are combined to form a shifting package (11) with a common actuator in such a way that either exclusively the first positively locking shifting element (A) is closed or exclusively the second positively locking shifting element (B) is closed or both positively locking shifting elements (A, B) are open.

3. Hybrid drive according to Claim 1 or 2, **characterized in that** the input shafts (7, 8) of the two component transmissions (5, 6) are arranged coaxially with respect to one another.

4. Method for operating a motor vehicle having a hybrid drive according to one of Claims 1 to 3, **characterized in that** the first positively locking shifting element (A) is closed in the generator mode of the electric machine (3) when the speed of the motor vehicle is lower than a limit value, in particular when the motor vehicle is at a standstill, and **in that** the first positively locking shifting element (A) is open and preferably the second positively locking shifting element (B) is closed when the speed of the motor vehicle is higher than the limit value.

5. Method for operating a hybrid drive according to one of Claims 1 to 3, **characterized in that**, when the motor vehicle is at a standstill, for the generator mode of the electric machine (3), the first positively locking shifting element (8) is closed, a starting gear is engaged in the first component transmission (5), a neutral position is engaged in the second component transmission (6), and the frictional clutch (10) is closed at most as far as the application point thereof, the frictional clutch (10) being closed beyond the application point for subsequent starting or crawling away, and the starting or crawling away being ended when the frictional clutch (10) grips.

6. Method for operating a hybrid drive according to one of Claims 1 to 3, **characterized in that**, in order to carry out a gear change from an actual gear of the first component transmission (5) into a target gear of the second component transmission (6), starting from internal combustion engine driving of the motor vehicle with a closed frictional clutch (10) and with open positively locking shifting elements (A, B), first of all the target gear is synchronized and then engaged, subsequently, in order to ensure a load transition from the internal combustion engine (2) to the electric machine (3), load is built up on the electric machine (3) and load is dissipated on the internal combustion engine (2) and, if required, the frictional clutch (10) is opened, subsequently the actual gear is disengaged and the second shifting element (B) is synchronized and closed, and subsequently, in order to ensure a load transition from the electric machine (3) back to the internal combustion engine (2), load is dissipated on the electric machine (3) and load is built up on the internal combustion engine (2) and, if required, the frictional clutch (10) is closed.

7. Method for operating a hybrid drive according to one of Claims 1 to 3, **characterized in that**, in order to carry out a gear change from an actual gear of the second component transmission (6) into a target gear of the first component transmission (5), starting from internal combustion engine driving of the motor vehicle with a closed frictional clutch (10), with an open first positively locking shifting element (A) and a closed second positively locking shifting element (B), first of all, in order to ensure a load transition from the internal combustion engine (2) to the electric machine (3), load is built up on the electric machine (3) and load is dissipated on the internal combustion engine (2), the second positively locking shifting element (B) is opened and, if required, the frictional clutch (10) is opened, subsequently the target gear is synchronized and then engaged, subsequently, in order to ensure a load transition from the electric machine (3) back to the internal combustion engine (2), load is dissipated on the electric machine (3) and load is built up on the internal combustion engine (2) and, if required, the frictional clutch (10) is closed.

8. Method for operating a hybrid drive according to one of Claims 1 to 3, **characterized in that**, in order to carry out a gear change from an actual gear of the first component transmission (5) into a target gear of the first component transmission (5), starting from internal combustion engine driving of the motor vehicle with a closed frictional clutch (10) and with open positively locking shifting elements (A, B), first of all an intermediate gear is synchronized and engaged in the second component transmission (6), finally, in order to ensure a load transition from the internal combustion engine (2) to the electric machine (3), load is built up on the electric machine (3) and load is dissipated on the internal combustion engine (2) and, if required, the frictional clutch (10) is opened, subsequently the actual gear is disengaged and the target gear is synchronized and engaged, subsequently, in order to ensure a load transition from the electric machine (3) back to the internal combustion engine (2), load is dissipated on the electric machine (3) and load is built up on the internal combustion engine (2) and, if required, the frictional clutch (10) is closed.

9. Method for operating a hybrid drive according to one of Claims 1 to 3, **characterized in that**, in order to carry out a gear change from an actual gear of the second component transmission (6) into a target gear of the second component transmission (6), starting from internal combustion engine driving of the motor vehicle with a closed frictional clutch (10), with an open first positively locking shifting element (A) and a closed second positively locking shifting element (B), first of all, in order to ensure a load transition from the internal combustion engine (2) to the electric machine (3), load is built up on the electric machine (3) and load is dissipated on the internal combustion engine (2), the second positively locking shifting element (B) is opened and, if required, the frictional clutch (10) is opened, subsequently an intermediate gear of the first component transmission (5) is synchronized and engaged, subsequently, in order to ensure a load transition from the electric machine (3) back to the internal combustion engine (2), load is dissipated on the electric machine (3) and load is built up on the internal combustion engine (2) and, if required, the frictional clutch (10) is closed, subsequently the actual gear of the second component transmission (6) is disengaged and the target gear of the second component transmission (6) is synchronized and engaged, subsequently, in order to ensure a further load transition from the internal combustion engine (2) to the electric machine (3), load is built up on the electric machine (3) and load is dissipated on the internal combustion engine (2) and, if required, the frictional clutch (10) is opened, subsequently the intermediate gear of the first component transmission (5) is disengaged and the second positively locking shifting element (B) is synchronized and engaged, and subsequently, in order to ensure a further load transition from the electric machine (3) back to the internal combustion engine (2), load is dissipated on the electric machine (3) and load is built up on the internal combustion engine (2) and, if required, the frictional clutch (10) is closed.

## Revendications

1. Entraînement hybride d'un véhicule automobile, avec un moteur à combustion interne (2), avec une machine électrique (3) et avec une boîte de vitesses (4), dans lequel la boîte de vitesses (4) est une boîte de vitesses à plusieurs étages avec deux boîtes de vitesses partielles (5, 6), qui présentent chacune un arbre d'entrée séparé (7, 8) et un arbre de sortie commun (9), dans lequel un premier arbre d'entrée (7) d'une première boîte de vitesses partielle (5) peut être couplé au moteur à combustion interne (2) au moyen d'un embrayage à friction (10) de telle manière que, lorsque l'embrayage (10) est fermé, le moteur à combustion interne (2) soit couplé au premier arbre d'entrée (7) et de ce fait à la première boîte de vitesses partielle (5) et que, lorsque l'embrayage (10) est ouvert, celui-ci soit découplé du premier arbre d'entrée (7) et de ce fait de la première boîte de vitesses partielle (5), dans lequel un deuxième arbre d'entrée (8) d'une deuxième boîte de vitesses partielle (6) est couplé fixement à la machine électrique (3), et dans lequel les deux arbres d'entrée (7, 8) peuvent être couplés par des éléments de couplage à emboîtement des boîtes de vitesses partielles (5, 6) de façon sélective à l'arbre de sortie commun (9), **caractérisé en ce que** plusieurs éléments de couplage à emboîtement (A, B) sont associés au deuxième arbre d'entrée (8) de la deuxième boîte de vitesses partielle (6) de telle manière que, lorsqu'un premier élément de couplage à emboîtement (A) est fermé, la machine électrique (3) soit couplée au moteur à combustion interne (2) et que le moteur à combustion interne (2) soit ainsi couplé en compagnie de la machine électrique (3) à la deuxième boîte de vitesses partielle (6) et que, lorsqu'un deuxième élément de couplage à emboîtement (B) est fermé, la machine électrique (3) soit couplée aux deux arbres d'entrée (7, 8) des deux boîtes de vitesses partielles (5, 6) et que la première boîte de vitesses partielle (5) soit de ce fait couplée à la deuxième boîte de vitesses partielle (6).

2. Entraînement hybride selon la revendication 1, **caractérisé en ce que** le premier élément de couplage à emboîtement (A) et le deuxième élément de couplage à emboîtement (B) sont rassemblés en un paquet de couplage (11) avec un actionneur commun, de telle manière que soit exclusivement le premier élément de couplage à emboîtement (A) soit fermé soit exclusivement le deuxième élément de couplage à emboîtement (B) soit fermé soit encore que les deux éléments de couplage à emboîtement (A, B) soient ouverts.

3. Entraînement hybride selon la revendication 1 ou 2, **caractérisé en ce que** les arbres d'entrée (7, 8) des deux boîtes de vitesses partielles (5, 6) sont disposés coaxialement l'un à l'autre.

4. Procédé pour faire fonctionner un véhicule automobile avec un entraînement hybride selon l'une quelconque des revendications 1 à 3, **caractérisé en ce que** le premier élément de couplage à emboîtement (A) en fonctionnement en générateur de la machine électrique (3) est fermé, lorsque la vitesse du véhicule automobile est inférieure à une valeur limite, en particulier lorsque le véhicule automobile est à l'arrêt, et **en ce que** le premier élément de couplage à emboîtement (A) est ouvert et de préférence le deuxième élément de couplage à emboîtement (B) est fermé lorsque la vitesse du véhicule automobile est supérieure à la valeur limite.

5. Procédé pour faire fonctionner un entraînement hybride selon l'une quelconque des revendications 1 à 3, **caractérisé en ce que**, lorsque le véhicule automobile est à l'arrêt, pour le fonctionnement en générateur de la machine électrique (3), on ferme le premier élément de couplage à emboîtement (A), on engage un rapport de démarrage dans la première boîte de vitesses partielle (5), on engage une position neutre dans la deuxième boîte de vitesses partielle (6), et on ferme l'embrayage à friction (10) au maximum jusqu'au point d'application, dans lequel, pour le démarrage ou l'amorçage qui suit, on ferme l'embrayage à friction (10) au-delà du point d'application, et dans lequel le démarrage ou l'amorçage est terminé lorsque l'embrayage à friction (10) adhère.

6. Procédé pour faire fonctionner un entraînement hybride selon l'une quelconque des revendications 1 à 3, **caractérisé en ce que**, pour l'exécution d'un changement de vitesse depuis un rapport existant de la première boîte de vitesses partielle (5) à un rapport visé de la deuxième boîte de vitesses partielle (6), à partir d'un déplacement du véhicule automobile avec le moteur à combustion interne avec l'embrayage à friction (10) fermé et les éléments de couplage à emboîtement (A, B) ouverts, on synchronise d'abord le rapport visé et ensuite on l'engage, puis pour garantir un transfert de charge du moteur à combustion interne (2) à la machine électrique (3), on applique une charge à la machine électrique (3) et on enlève une charge au moteur à combustion interne (2) et au besoin on ouvre l'embrayage à friction (10), ensuite on dégage le rapport existant et on synchronise le deuxième élément de couplage (B) et on le ferme, et ensuite, pour garantir un transfert de charge de la machine électrique (3) en retour au moteur à combustion interne (2), on enlève une charge à la machine électrique (3) et on applique une charge au moteur à combustion interne (2) et au besoin on ferme l'embrayage à friction (10).

7. Procédé pour faire fonctionner un entraînement hybride selon l'une quelconque des revendications 1 à 3, **caractérisé en ce que**, pour l'exécution d'un changement de vitesse depuis un rapport existant de la deuxième boîte de vitesses partielle (6) à un rapport visé de la première boîte de vitesses partielle (5), à partir d'un déplacement du véhicule automobile avec le moteur à combustion interne avec l'embrayage à friction (10) fermé, avec le premier élément de couplage à emboîtement (A) ouvert et le deuxième élément de couplage à emboîtement (B) fermé, d'abord pour garantir un transfert de charge du moteur à combustion interne (2) à la machine électrique (3), on applique une charge à la machine électrique (3) et on enlève une charge au moteur à combustion interne (2), on ouvre le deuxième élément de couplage à emboîtement (B) et au besoin on ouvre l'embrayage à friction (10), puis on synchronise le rapport visé et on l'engage, puis pour garantir un transfert de charge de la machine électrique (3) en retour au moteur à combustion interne (2), on enlève une charge à la machine électrique (3) et on applique une charge au moteur à combustion interne (2) et au besoin on ferme l'embrayage à friction (10).

8. Procédé pour faire fonctionner un entraînement hybride selon l'une quelconque des revendications 1 à 3, **caractérisé en ce que**, pour l'exécution d'un changement de vitesse depuis un rapport existant de la première boîte de vitesses partielle (5) à un rapport visé de la première boîte de vitesses partielle (5), à partir d'un déplacement du véhicule automobile avec le moteur à combustion interne avec l'embrayage à friction (10) fermé et avec les éléments de couplage à emboîtement (A, B) ouverts, d'abord on synchronise un rapport intermédiaire dans la deuxième boîte de vitesses partielle (6) et on l'engage, puis pour garantir un transfert de charge du moteur à combustion interne (2) à la machine électrique (3), on applique une charge à la machine électrique (3) et on enlève une charge au moteur à combustion interne (2) et au besoin on ouvre l'embrayage à friction (10), ensuite on dégage le rapport existant et on synchronise le rapport visé et on l'engage, puis pour garantir un transfert de charge de la machine électrique (3) en retour au moteur à combustion interne (2), on enlève une charge à la machine électrique (3) et on applique une charge au moteur à combustion interne (2) et au besoin on ferme l'embrayage à friction (10).

9. Procédé pour faire fonctionner un entraînement hybride selon l'une quelconque des revendications 1 à 3, **caractérisé en ce que**, pour l'exécution d'un changement de vitesse depuis un rapport existant de la deuxième boîte de vitesses partielle (6) à un rapport visé de la deuxième boîte de vitesses partielle (6), à partir d'un déplacement du véhicule automobile avec le moteur à combustion interne avec l'embrayage à friction (10) fermé, avec le premier élément de couplage à emboîtement (A) ouvert et le deuxième élément de couplage à emboîtement (B) fermé, d'abord pour garantir un transfert de charge du moteur à combustion interne (2) à la machine électrique (3), on applique une charge à la machine électrique (3) et on enlève une charge au moteur à combustion interne (2), on ouvre le deuxième élément de couplage à emboîtement (B) et au besoin on ouvre l'embrayage à friction (10), ensuite on synchronise un rapport intermédiaire de la première boîte de vitesses partielle (5) et on l'engage, puis pour garantir un transfert de charge de la machine électrique (3) en retour au moteur à combustion interne (2), on enlève une charge à la machine électrique (3) et on applique une charge au moteur à combustion interne (2) et au besoin on ferme l'embrayage à friction (10), ensuite on dégage le rapport existant de la deuxième boîte de vitesses partielle (6) et on synchronise le rapport visé de la deuxième boîte de vitesses partielle (6) et on l'engage, puis pour garantir un autre transfert de charge du moteur à combustion interne (2) à la machine électrique (3) on applique une charge à la machine électrique (3) et on enlève une charge au moteur à combustion interne (2) et au besoin on ouvre l'embrayage à friction (10), ensuite on dégage le rapport intermédiaire de la première boîte de vitesses partielle (5) et on synchronise le deuxième élément de couplage à emboîtement (B) et on l'engage, et ensuite pour garantir un autre transfert de charge de la machine électrique (3) en retour au moteur à combustion interne (2) on enlève une charge à la machine électrique (3) et on applique une charge au moteur à combustion interne (2) et au besoin on ferme l'embrayage à friction (10).
